## Europäisches Patentamt
## European Patent Office
## Office européen des brevets

(19)

(11) Veröffentlichungsnummer: **0 291 134**
**A2**

(12)
# EUROPÄISCHE PATENTANMELDUNG

(21) Anmeldenummer: **88200942.6**

(51) Int. Cl.⁴: **G11B 17/22**

(22) Anmeldetag: **11.05.88**

(30) Priorität: **13.05.87 DE 3715942**

(43) Veröffentlichungstag der Anmeldung:
**17.11.88 Patentblatt 88/46**

(84) Benannte Vertragsstaaten:
**DE FR GB IT**

(71) Anmelder: **Philips Patentverwaltung GmbH
Wendenstrasse 35 Postfach 10 51 49
D-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **FR GB IT**

(72) Erfinder: **Deis, August
Morgenröte 17
D-5900 Siegen 32(DE)**

(74) Vertreter: **Koch, Ingo, Dr.-Ing. et al
Philips Patentverwaltung GmbH
Wendenstrasse 35 Postfach 10 51 49
D-2000 Hamburg 1(DE)**

(54) **Lesevorrichtung für auf einer Vielzahl von Informationsplatten gespeicherte Informationsdaten.**

(57) Die Erfindung betrifft eine Lesevorrichtung für auf einer Vielzahl von Informationsplatten gespeicherte Informationsdaten. Ein besonders einfacher Aufbau mit schneller Zugriffsmöglichkeit zu den Informationsdaten ergibt sich dadurch,

- daß ein Karussell-Magazin in einer senkrechten Ebene drehbar ist,
- daß eine Plattenantriebsvorrichtung derart von dem Karussell-Magazin umgeben ist, daß die übernommene Platte in einer senkrechten Ebene drehbar ist, welche zur Ablageebene eines unterhalb bzw. oberhalb dieser Drehebene befindlichen Ablagefaches im wesentlichen parallel ausgerichtet ist,
- daß eine Zuführungseinrichtung im wesentlichen aus einem Einfalltrichter und einem Ausfalltrichter besteht, die oberhalb bzw. unterhalb eines Einfallfaches der Plattenantriebsvorrichtung angeordnet sind,
- daß jedem Ablagefach eine entriegelbare Haltevorrichtung für die Platten zugeordnet ist und
- daß dem Einfallfach der Plattenantriebsvorrichtung eine entriegelbare Haltevorrichtung für eine zugeführte Platte zugeordnet ist.

Fig.1

## Lesevorrichtung für auf einer Vielzahl von Informationsplatten gespeicherte Informationsdaten

Die Erfindung bezieht sich auf eine Lesevorrichtung für auf einer Vielzahl von Informationsplatten gespeicherte Informationsdaten,
- mit einem drehbaren Karussell-Magazin, welches eine Vielzahl von am Umfang verteilten Ablagefächern für die Informationsplatten aufweist,
- mit einer Plattenantriebsvorrichtung zur Drehung jeweils einer aus dem Karussell-Magazin ausgewählten Platte
- mit einer Zuführungseinrichtung für den Transport einer Platte aus einem Ablagefach in die Plattenantriebsvorrichtung und zurück in ein Ablagefach, und
- mit einer Abtastvorrichtung zum Lesen der auf einer von der Plattenantriebsvorrichtung gedrehten Platte gespeicherten Informationsdaten.

Insbesondere für die Dokumentationsverarbeitung werden sehr große Informationsspeicher benötigt. Das derzeit geeigneteste Informationsmedium ist die optische Platte, aus welcher die Informationen optisch auslesbar sind. Um zu großen Speichereinheiten zu kommen, werden eine Vielzahl solcher optischer Platten samt Gehäuse (Cartridges) in geeigneten Fächern eines Massenspeichers gelagert.

Ein Zugriffmechanismus ergreift eine zu bearbeitende Platte und lädt sie in eine Bearbeitungseinrichtung (Drive) bekannter Art. Bei bekannten Massenspeichern dieser Art müssen die Plattengehäuse mit beschleunigt werden. Die gespeicherten Platten sind in einer Ebene angeordnet. Deshalb ergeben sich kostenaufwendige Konstruktionen und lange Zugriffszeiten.

Eine eingangs genannte Einrichtung ist durch die DE-AS 20 43 289 für einen Musikautomat zum Abspielen von Schallplatten bekannt.

Der Erfindung liegt die Aufgabe zugrunde, eine Lesevorrichtung der eingangs genannten Art insbesondere zur Verwendung für optische Speicherplatten zu vereinfachen und einen schnellen Zugriff zu den auf den Platten gespeicherten Informationsdaten zu ermöglichen.

Die Lösung gelingt dadurch,
- daß das Karussell-Magazin in einer senkrechten Ebene drehbar ist
- daß die Plattenantriebsvorrichtung derart von dem Karussell-Magazin umgeben ist, daß die übernommene Platte in einer senkrechten Ebene drehbar ist, welche zur Ablageebene eines unterhalb bzw. oberhalb dieser Drehebene befindlichen Ablagefaches im wesentlichen parallel ausgerichtet ist,
- daß die Zuführungseinrichtung im wesentlichen aus einem Einfalltrichter und einem Ausfalltrichter besteht, die oberhalb bzw. unterhalb eines Einfallfaches der Plattenantriebsvorrichtung angeordnet sind,

- daß jedem Ablagefach eine entriegelbare Haltevorrichtung für die Platten zugeordnet ist, und
- daß dem Einfallfach der Plattenantriebvorrichtung eine entriegelbare Haltevorrichtung für eine zugeführte Platte zugeordnet ist.

Für die Entnahme einer Platte aus einem oberen Ablagefach und für die Rückführung in ein unteres Ablagefach sind keinerlei Antriebsvorrichtungen erforderlich, da der Transport durch die Schwerkraft bewirkt wird. Die jeweils aus einem Ablagefach zu entnehmende Platte wird in eine Lage senkrecht oberhalb des Einfallfaches der Plattenantriebsvorrichtung gebracht. Von dort fällt sie nach Entriegelung der Haltevorrichtung über einen Einfalltrichter direkt in das Einfallfach.

Nach dem Auslesen der Informationsdaten wird die Haltevorrichtung der Plattenantriebsvorrichtung entriegelt, so daß die Platte über einen Ausfalltrichter in eine unterhalb der Plattenantriebsvorrichtung befindliches Ablagefach fallen kann.

Eine weitere Vereinfachung ergibt sich als Weiterbildung der Erfindung dadurch, daß die Plattenantriebsvorrichtung derart ausgebildet ist, daß auf beiden Seiten einer Platte gespeicherte Informationsdaten ohne Wenden der Platte auslesbar sind. Dadurch wird der Zeitaufwand für einen mechanischen Wendevorgang eingespart. Gemäß einer bevorzugten Lösung ist vorgesehen, daß zwei Plattenantriebsvorrichtungen mit je einer Abtastvorrichtung spiegelbildlich nebeneinander angeordnet sind, welche zwischen sich ein Einfallfach für eine aus einem Ablagefach einfallende Platte bilden.

Damit die Ablagefächer von außen geladen werden können, ist vorgesehen, daß mindestens eines der Ablagefächer eine nach außen zugängliche Ladeöffnung zum Einlegen oder zur Entnahme einer Platte aufweist. Dabei kann jedes Ablagefach eine solche Ladeöffnung aufweisen, so daß jedes Fach direkt füllbar ist. Falls nur ein einziges Ablagefach mit einer von außen zugänglichen Ladeöffnung versehen ist, muß die Ladung der übrigen Ablagefächer über das zu öffnende Fach und über den Umweg der Plattenantriebsvorrichtung erfolgen.

Die erfindungsgemäße Lesevorrichtung ist insbesondere geeignet zur Anwendung für optisch auslesbare Informationsplatten. Dem Fachmann sind Ausführungsarten und Antriebsvorrichtungen, welche eine eingeführte Platte beliebiger Art (optisch, magnetisch oder mechanisch auslesbar) zentrisch erfassen, vielfältig bekannt.

Die Erfindung wird anhand eines in der Zeichnung schematisch dargestellten Ausführungsbeispiels näher erläutert.

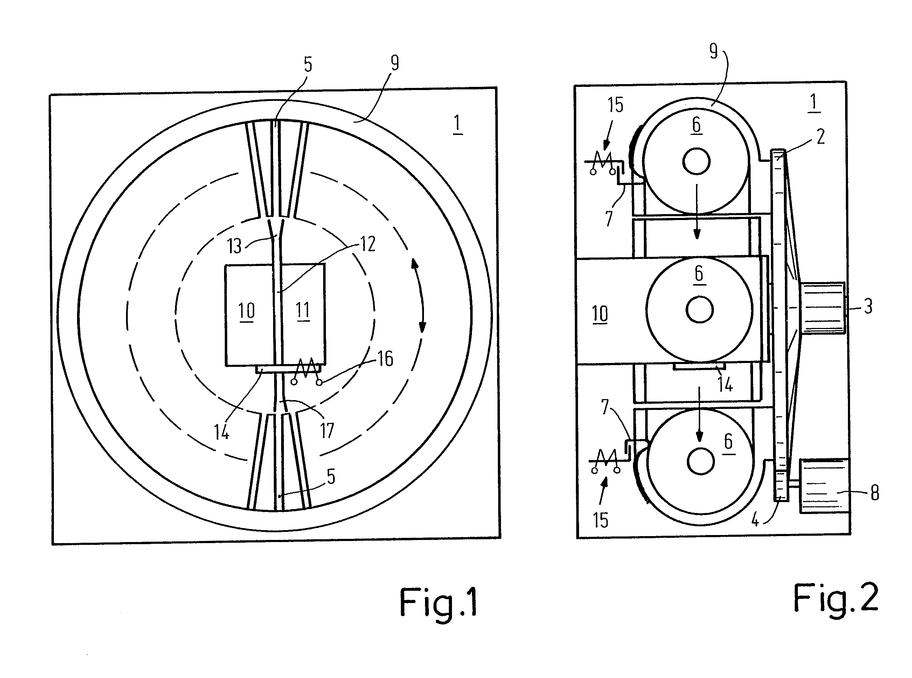

Fig. 1 zeigt eine erfindungsgemäße Lesevorrichtung im Querschnitt.

Fig. 2 zeigt die Vorrichtung nach Fig. 1 im Längsschnitt.

Im Gehäuse 1 ist ein Karussell-Magazin in einer senkrechten Ebene drehbar. Es besteht aus einer Tragscheibe 2 mit halbschaligem Tragring 9, welche um die Achse 3 und über das Ritzel 4 des Antriebsmotors 8 drehbar ist, sowie einer Vielzahl von Ablagefächern 5, die an der inneren Umfangsfläche des Tragrings 9 gehalten sind.

In den Ablagefächern 5 sind Platten 6 jeweils durch Klemmbügel 7 in einer Ebene gehalten, welche in bevorzugter Weise orthogonal zur Drehebene des Karussell-Magazins ausgerichtet ist und welche in besonders einfacher Gestaltung durch die Achse 3 verläuft.

Innerhalb der kreisförmigen Anordnung der Ablagefächer sind gleichartige Plattenantriebsvorrichtungen 10 und 11 spiegelbildlich zueinander angeordnet, welche zwischen sich ein Einfallfach 12 bilden, in welches eine Platte 6 aus einem oberhalb des Einfallfaches befindlichen Ablagefach 5 über den Einfalltrichter 13 bis zu einer Plattform 14 einfallen kann, wenn der entsprechende Klemmbügel 7 durch den elektrisch betätigbaren Magnetanker 15 entriegelt wird.

Je nach dem, von welcher Seite der Platte der Informationsgehalt ausgelesen werden soll, übernimmt eine der Antriebsvorrichtung 10 oder 11 die Drehung der Platte 6, so daß mittels nicht dargestellter, vorzugsweise optischer Abtastvorrichtungen der Informationsgehalt ausgelesen werden kann. Danach wird die Plattform 14 durch Ansteuerung der Magnetspule 16 zurückgezogen, so daß die Platte 6 durch den Ausfalltrichter 17 in das darunter befindliche freie Ablagefach 5 fallen kann.

Eine manuelle Steuerung der Drehbewegung des Magazin-Karussells sowie der Entriegelungen für die Ablagefächer 5 und das Einfallfach 12 ist möglich. Vorzugsweise kann jedoch eine automatische Steuerung über eine entsprechende Programmierung erfolgen. Die Art und Weise der Steuerung ist nicht Gegenstand der Erfindung und deshalb nicht näher dargestellt.

Die Ladung der Ablagefächer 5 mit Platten 6 kann über eine oder mehrere nicht dargestellte - schließbare Öffnungen des Halterings 9 erfolgen.

## Ansprüche

1. Lesevorrichtung für auf einer Vielzahl von Informationsplatten gespeicherte Informationsdaten,
- mit einem drehbaren Karussell-Magazin, welches eine Vielzahl von am Umfang verteilten Ablagefächern für die Informationsplatten aufweist,
- mit einer Plattenantriebsvorrichtung zur Drehung jeweils einer aus dem Karussell-Magazin ausgewählten Platte
- mit einer Zuführungseinrichtung für den Transport einer Platte aus einem Ablagefach in die Plattenantriebsvorrichtung und zurück in ein Ablagefach, und
- mit einer Abtastvorrichtung zum Lesen der auf einer von der Plattenantriebsvorrichtung gedrehten Platte gespeicherten Informationsdaten,
dadurch gekennzeichnet,
- daß das Karussell-Magazin in einer senkrechten Ebene drehbar ist
- daß die Plattenantriebsvorrichtung derart von dem Karussell-Magazin umgeben ist, daß die übernommene Platte in einer senkrechten Ebene drehbar ist, welche zur Ablageebene eines unterhalb bzw. oberhalb dieser Drehebene befindlichen Ablagefaches im wesentlichen parallel ausgerichtet ist,
- daß die Zuführungseinrichtung im wesentlichen aus einem Einfalltrichter und einem Ausfalltrichter besteht, die oberhalb bzw. unterhalb eines Einfallfaches der Plattenantriebsvorrichtung angeordnet sind,
- daß jedem Ablagefach eine entriegelbare Haltevorrichtung für die Platten zugeordnet ist, und
- daß dem Einfallfach der Plattenantriebsvorrichtung eine entriegelbare Haltevorrichtung für eine zugeführte Platte zugeordnet ist.

2. Anordnung nach Anspruch 1,
dadurch gekennzeichnet, daß die Plattenantriebsvorrichtung derart ausgebildet ist, daß auf beiden Seiten einer Platte gespeicherte Informationsdaten ohne Wenden der Platte auslesbar sind.

3. Anordnung nach Anspruch 2,
dadurch gekennzeichnet, daß zwei Plattenantriebsvorrichtungen mit je einer Abtastvorrichtung spiegelbildlich nebeneinander angeordnet sind, welche zwischen sich ein Einfallfach für eine aus einem Ablagefach einfallende Platte bilden.

4. Anordnung nach einem der Ansprüche 1 bis 3,
dadurch gekennzeichnet, daß mindestens eines der Ablagefächer eine nach außen zugängliche Ladeöffnung zum Einlegen oder zur Entnahme einer Platte ausweist.

5. Anordnung nach einem der Ansprüche 1 bis 4,
gekennzeichnet durch die Verwendung für Platten mit optisch auslesbaren Informationsdaten.

# Fig.1

# Fig.2